# FASCICULE DE BREVET EUROPEEN

(11) **EP 4 526 158 B1**
(45) Date de publication et mention de la délivrance du brevet: **22.07.2026**
(21) Numéro de dépôt: 23716350.6
(22) Date de dépôt: 22.03.2023
(51) Int. Cl.: B60R 16/02, B60L 53/16, B60L 53/18, B65H 75/36

(54) **VEHICULE ELECTRIQUE COMPRENANT UNE RALLONGE DE RECHARGE ELECTRIQUE DEPLOYABLE**
ELEKTROFAHRZEUG MIT AUSFAHRBARER ELEKTRISCHER LADEERWEITERUNGSLEITUNG
ELECTRIC VEHICLE COMPRISING A DEPLOYABLE ELECTRICAL CHARGING EXTENSION LEAD

(30) Priorité: 20.05.2022 FR 2204842
(43) Date de publication de la demande: 26.03.2025
(73) Titulaire: Stellantis Auto SAS, 78300 Poissy (FR)
(72) Inventeur: GOHIER, Gael, 91190 Gif-sur-Yvette (FR); HARLAY, Nicolas, 91220 Le Plessis-Pâté (FR); BRUCAMP, Gabriel, 78210 Saint-Cyr-l'École (FR)
(74) Mandataire: PSIP
(86) Numéro de dépôt international: PCT/FR2023/050411
(87) Numéro de publication internationale: WO 2023/222959

(56) Documents cités:
- DE-A1- 102010 048 384
- DE-A1- 102011 109 414
- DE-A1- 102011 116 746
- DE-A1- 102011 121 303
- DE-C2- 4 212 207

## Description

L'invention concerne les véhicules automobiles propres à se raccorder à un réseau électrique terrestre, notamment pour une phase de recharge d'une batterie de stockage d'énergie électrique de ce véhicule automobile.

Ainsi sont particulièrement concernés par l'invention les véhicules comprenant un moyen de propulsion à énergie électrique, comme les véhicules dits électriques rechargeables ou encore les véhicule hybrides rechargeables.

Il existe plusieurs modes ou technologie de recharge de ces véhicules via ce réseau électrique terrestre. Par exemple on distinguera au moins un premier mode de recharge en courant alternatif, auquel cas c'est un chargeur embarqué dans le véhicule qui redresse ce courant pour charger la batterie, et un deuxième mode de recharge en courant continu, de plus forte puissance que le premier mode, ce courant continu étant délivré directement par une borne de recharge du réseau électrique terrestre, par exemple sans passer par le chargeur embarqué.

Dans ce but, le véhicule est équipé d'une prise électrique propre à être raccordée au réseau électrique terrestre. Ces au moins deux modes de recharge sont très différents : le premier mode est par exemple entièrement piloté par le chargeur embarqué du véhicule, alors que le deuxième mode nécessite un pilotage partagé entre la borne de recharge et la batterie, si bien que le véhicule est équipé d'une prise électrique différente pour chacun de ces deux modes de recharge.

Pour le premier mode de recharge, on connait du document de brevet CN-A-109278575 une rallonge électrique intégrée dans le véhicule et déployable à l'extérieur du véhicule pour connecter le véhicule au réseau électrique terrestre. Cette rallonge électrique comprend un moyen de rappel élastique de la rallonge en position rétractée constitué par :
- la rallonge elle-même en forme de spirales,
- un guide tubulaire de la rallonge, central aux spirales,
- un logement logeant le guide et la rallonge.

Malheureusement ce moyen de rappel élastique est complexe à mettre en œuvre car le guide tubulaire a un porte-à-faux très long susceptible d'amplifier des vibrations du guide et des spirales et provoquer un bruit audible depuis l'habitacle du véhicule.

En outre, lorsque la rallonge est déployée, le diamètre des spirales diminue et ces spirales peuvent alors se bloquer contre le guide et empêcher la rallonge de se rétracter dans le logement.

En outre, l'état de la technique est connu du document DE2011109414A1.

Le but de l'invention est de remédier au moins l'un de ces problèmes, en proposant un véhicule automobile comprenant :
- une batterie de stockage d'énergie électrique,
- une carrosserie,
- une prise électrique,

cette prise comprenant :
   - un boitier solidaire de la carrosserie,
   - une rallonge électrique déployable en dehors du véhicule,
   - un connecteur électrique logé de façon amovible dans le boîtier, accessible par un opérateur depuis l'extérieur de la carrosserie, ce connecteur étant d'une part électriquement raccordé à la batterie au moyen de la rallonge électrique, et d'autre part propre à être en outre raccordé à un réseau électrique terrestre si la rallonge est déployée, cette rallonge formant une spirale élastique hélicoïdale propre à rappeler le connecteur électrique dans le boîtier, ce boîtier comprenant un fond à partir duquel s'étend un tube de guidage de la rallonge, ce tube étant périphérique à la spirale, ce véhicule comportant en outre une deuxième prise électrique comprenant :
      - un deuxième boitier solidaire de la carrosserie,
      - un deuxième connecteur électrique logé de façon permanente dans le deuxième boîtier, accessible par un opérateur depuis l'extérieur de la carrosserie, ce connecteur étant d'une part électriquement raccordé à la batterie, et d'autre part propre à être en outre raccordé à un réseau électrique terrestre,
cette deuxième prise étant configurée pour recevoir un courant continu du réseau électrique terrestre.

On notera que si ce connecteur est électriquement raccordé à la batterie au moyen de la rallonge électrique déployable, il n'est pas obligatoirement directement raccordé à la batterie au moyen de la rallonge électrique déployable, en particulier la rallonge électrique déployable peut être raccordée au connecteur d'une part, et en outre raccordée à un module d'alimentation d'autre part qui lui-même est raccordé à la batterie. Comme cela sera décrit ultérieurement, ce module d'alimentation est chargé de contrôler l'alimentation de la batterie lors d'une phase de recharge, et en particulier redresser un courant alternatif fourni par le réseau électrique terrestre.

Ce tube de guidage peut alors aisément être fixé au véhicule car la spirale ne le recouvre pas. Ainsi ce tube n'entre pas en vibrations et ne génère plus de bruits. En outre, lorsque la rallonge électrique est déployée en dehors du véhicule, le diamètre de la spirale diminue ce qui laisse plus de jeu entre la spirale et l'intérieur du tube de guidage : il y a donc impossibilité de blocage lors de la rétractation de la rallonge dans le tube de guidage. En position rangée ou rétractée dans le tube de guidage, le diamètre de la spirale de la rallonge est à sa dimension maximale ce qui réduit le jeu entre la spirale et l'intérieur du tube de guidage, limitant ainsi l'apparition de vibrations entre la rallonge et le tube de guidage, et donc le bruit.

Un autre avantage est que ce tube de guidage a aussi pour fonction de protéger la rallonge contre un écrasement de la rallonge par une déformation de la carrosserie en cas d'accident du véhicule. Dans l'art antérieur, cette seconde fonction est assurée par une pièce supplémentaire au guidage de la rallonge.

Cette deuxième prise est par exemple compatible pour recevoir en outre le courant alternatif du réseau électrique terrestre, de sorte que l'opérateur (ou conducteur) peut choisir l'une ou l'autre des deux prises pour une recharge de la batterie avec ce courant alternatif.

Selon un mode de réalisation de l'invention, ce tube de guidage se prolonge le long de, et derrière la carrosserie. Il est ainsi invisible depuis l'extérieur du véhicule.

Selon un mode de réalisation de l'invention, ce tube de guidage se prolonge transversalement au véhicule le long d'une face arrière de la carrosserie par rapport au sens d'avancement principal du véhicule, la face arrière se comprenant comme toute partie visible de la carrosserie à partir d'un point d'observation situé en arrière du véhicule et sur l'axe longitudinal du véhicule.

Selon un mode de réalisation de l'invention, cette prise électrique est configurée pour recevoir uniquement un courant alternatif du réseau électrique terrestre.

Selon un mode de réalisation de l'invention, chacune des deux prises comprend une trappe comprenant un moyen d'articulation propre à la positionner dans une position de fermeture et une position d'ouverture du boitier pour l'accès au connecteur électrique par un opérateur depuis l'extérieur du véhicule, ces deux trappes étant l'image l'une de l'autre par une symétrie plane dont le plan de symétrie est vertical et comprend l'axe longitudinal du véhicule.

Selon un mode de réalisation de l'invention, les deux trappes sont situées sur une face arrière de la carrosserie par rapport au sens d'avancement principal du véhicule, la face arrière se comprenant comme toute partie visible de la carrosserie à partir d'un point d'observation situé en arrière du véhicule et sur l'axe longitudinal du véhicule.

Selon plusieurs variantes de réalisation de l'invention, les deux trappes sont situées sur un des éléments d'un ensemble d'éléments de la carrosserie parmi : une partie arrière d'une aile arrière, un pare-chocs arrière, un feu de signalisation arrière, un ouvrant de coffre arrière.

Selon un mode de réalisation de l'invention, les trappes sont distantes l'une de l'autre.

Notamment chacune des trappes est située le plus possible vers un coté du véhicule, de sorte à pouvoir s'adapter à plusieurs emplacements possibles pour une fiche électrique d'interface de recharge du réseau électrique terrestre.

Selon un mode de réalisation de l'invention, les moyens d'articulation présentent chacun un axe de pivotement de chacune des trappes par rapport aux boitiers, ces trappes s'ouvrant vers l'arrière du véhicule par rapport au sens d'avancement principal du véhicule.

D'autres particularités et avantages apparaîtront à la lecture de la description ci-après d'un mode particulier de réalisation, non limitatif de l'invention, faite en référence aux figures dans lesquelles :
[Fig 1] : représente une silhouette arrière d'un véhicule selon l'invention.
[Fig 2] : représente une section très simplifiée de la rallonge selon l'invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En outre, dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées. Les références des éléments inchangés ou ayant la même fonction sont communes à toutes les figures, et les variantes de réalisation.

On notera que dans tout le texte de ce document, on considère un repère orthogonal X,Y,Z lié au véhicule:
- l'axe X est l'axe longitudinal du véhicule et orienté dans le sens d'avance principal du véhicule, dit marche avant,
- l'axe Z est un axe dit vertical, qui est orthogonal à l'axe X et orthogonal au plan d'appui du véhicule sur une surface de roulage,
- l'axe Y est un axe dit transversal et qui est orthogonal aux axes X et Y.

Ce repère est représenté sur chacune des figures. L'axe X passe par exemple par le centre de gravité du véhicule, ou en variante par le centre géométrique du véhicule et en particulier par le centre géométrique de la silhouette du véhicule vue de l'arrière ou de l'avant du véhicule.

On comprendra par batterie, dans tout le texte de ce document, un ensemble comprenant au moins un module de batterie contenant au moins une cellule électrochimique, la batterie de servitude étant considérée équivalente à au moins un module. Cette batterie comprend éventuellement des moyens électriques ou électroniques pour la gestion d'énergie électrique de ce au moins un module. Lorsqu'il y a plusieurs modules, ils sont regroupés dans un carter et forment alors un bloc batterie, ce bloc batterie étant souvent désigné par l'expression anglaise « pack battery », ce carter formant une enceinte hermétique et comprenant généralement une interface de montage, et des bornes de raccordement.

Par ailleurs, on comprendra par cellule électrochimique dans tout le texte de ce document, des cellules générant du courant par réaction chimique, par exemple de type lithium-ion (ou Li-ion), de type Ni-Mh, ou Ni-Cd ou encore plomb.

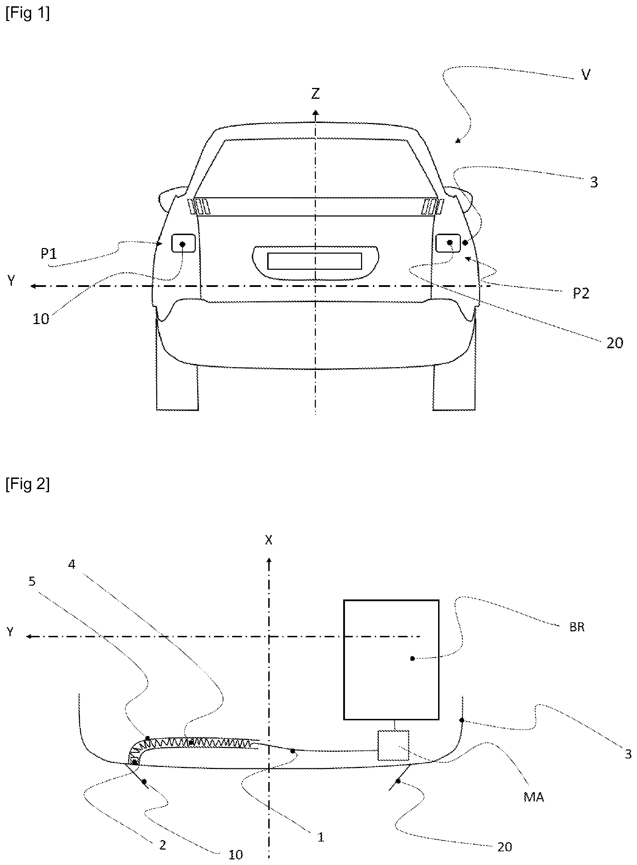

L'invention porte sur un véhicule automobile V. Il s'agit par exemple d'une voiture, comme illustré sur la figure 1. Elle concerne tout type de véhicule comprenant un groupe motopropulseur (ou GMP) tout électrique ou hybride et comprenant au moins une batterie de stockage d'énergie électrique rechargeable BR en courant continu ou en courant alternatif selon le choix de l'utilisateur. Ainsi, elle concerne les véhicules automobiles terrestres (véhicules utilitaires, camping-cars, minibus, cars, camions, motocyclettes, engins de voirie, engins de chantier, engins agricoles, engins de loisir (motoneige, kart), engins à chenille(s), et engins d'exploration à équipage).

Par ailleurs, on considère dans ce qui suit, à titre d'exemple non limitatif, que le GMP du véhicule V est tout électrique. Il comprend donc au moins une machine motrice électrique, non représentée, produisant notamment du couple pour ses déplacements à partir de l'énergie stockée dans la batterie rechargeable BR. Mais le GMP du véhicule V pourrait être hybride et donc comprendre au moins une machine motrice électrique et au moins une machine motrice non électrique (éventuellement thermique).

Les figures 1 et 2 divulguent un exemple de véhicule automobile V selon l'invention. Ce véhicule V comprend :
- une batterie BR de stockage d'énergie électrique,
- une carrosserie 3,
- une prise électrique P1,
cette prise comprenant :
- un boitier solidaire de la carrosserie 3,
- une rallonge électrique 1 déployable en dehors du véhicule V,
- un connecteur électrique 2 logé de façon amovible dans le boîtier, accessible par un opérateur depuis l'extérieur de la carrosserie 3, ce connecteur 2 étant d'une part électriquement raccordé à la batterie BR au moyen de la rallonge électrique 1, et d'autre part propre à être en outre raccordé à un réseau électrique terrestre si la rallonge 1 est déployée, cette rallonge 1 formant une spirale élastique hélicoïdale 4 propre à rappeler le connecteur électrique 2 dans le boîtier.

Ce boîtier est par exemple un bac dont le volume interne réalise un enfoncement dans la carrosserie, ce volume interne logeant le ou les connecteurs 2. Ce bac est fermé par une trappe 10, 20 qui est par exemple affleurante à la carrosserie 3. Cette trappe 10, 20 a une fonction d'esthétisme, mais réalise en outre une fonction de protection du connecteur 2 lorsque la prise P1, P2 n'est pas utilisée : protection contre des entrées d'eau, de poussière, ou contre des actions de vandalisme. Ce boîtier comprend par exemple des témoins de charge.

Ce boîtier comprend un fond à partir duquel s'étend un tube de guidage 5 de la rallonge 1, ce tube 5 étant périphérique à la spirale 4.

Ce tube de guidage 5 se prolonge par exemple le long de, et derrière la carrosserie 3.

Ce tube de guidage 5 se prolonge par exemple transversalement au véhicule V selon l'axe transversal Y, le long d'une face arrière de la carrosserie 3 par rapport au sens d'avancement principal du véhicule V, la face arrière se comprenant comme toute partie visible de la carrosserie 3 à partir d'un point d'observation situé en arrière du véhicule V et sur l'axe longitudinal X du véhicule.

Cette prise électrique P1 est par exemple configurée pour recevoir uniquement un courant alternatif du réseau électrique terrestre.

Ce véhicule V comprend par exemple une deuxième prise électrique P2 comprenant :
- un deuxième boitier solidaire de la carrosserie 3,
- un deuxième connecteur électrique logé de façon permanente dans le deuxième boîtier, accessible par un opérateur depuis l'extérieur de la carrosserie 3, ce connecteur étant d'une part électriquement raccordé à la batterie BR, et d'autre part propre à être en outre raccordé au réseau électrique terrestre,
cette deuxième prise P2 étant configurée pour recevoir un courant continu du réseau électrique terrestre.

Si le véhicule comprend les deux prises P1, P2, chacune des deux prises P1, P2 comprend deux trappe 10, 20 comprenant un moyen d'articulation propre à la positionner dans une position de fermeture et une position d'ouverture du boitier pour l'accès au connecteur électrique par un opérateur depuis l'extérieur du véhicule V, ces deux trappes 10, 20 étant l'image l'une de l'autre par une symétrie plane dont le plan de symétrie XZ est vertical et comprend l'axe longitudinal X du véhicule V.

Ces deux boîtiers sont, comme précédemment décrit, fermés par les deux trappes 10, 20 lorsque les prises P1, P2 ne sont pas utilisées.

Les deux trappes 10, 20 sont par exemple situées sur une face arrière de la carrosserie 3 par rapport au sens d'avancement principal du véhicule V, la face arrière se comprenant comme toute partie visible de la carrosserie 3 à partir d'un point d'observation situé en arrière du véhicule V et sur l'axe longitudinal X du véhicule.

On comprendra par « situées sur » dans tout le texte de ce document, le fait que ces trappes 10, 20, une fois ouvertes, donnent accès au connecteur 2 à travers l'élément de carrosserie considéré. La surface extérieure de la trappe 10, 20 est par exemple affleurante à la carrosserie environnante, ou en désaffleurement, ou en retrait, de même courbure ou pas.

Cette trappe peut en outre avoir un moyen de signalisation lumineux du véhicule, par exemple.

Par exemple, les deux trappes 10, 20 sont situées sur un des éléments d'un ensemble d'éléments de la carrosserie 3 parmi : une partie arrière d'une aile arrière, un pare-chocs arrière, un feu de signalisation arrière, un ouvrant de coffre arrière.

En particulier les trappes 10, 20 sont distantes l'une de l'autre.

Par exemple les moyens d'articulation présent chacun un axe de pivotement de chacune des trappes 10, 20 par rapport aux boitiers, ces trappes 10, 20 s'ouvrant vers l'arrière du véhicule V par rapport au sens d'avancement principal du véhicule V.

La première prise P1 et la deuxième prise P2 se différencient l'une de l'autre, par le type de courant, alternatif ou continu, et l'intensité du courant parcourant les connecteurs, ce qui engendre différents modes de recharge et différents types de prise.

Par exemple la deuxième prise P2 constitue une prise de type combo CCS2 (mais l'invention s'applique quel que soit le type de prise) connue de l'homme du métier, et donc adaptée pour un courant continu et un courant alternatif, par exemple jusqu'à 350 KW pour le courant continu. La recharge par ce courant continu est dite « recharge de mode 4 » mais cette deuxième prise P2 de type combo CCS2 permet aussi une recharge dite « recharge de mode 3 » pour laquelle le courant est un courant alternatif d'une puissance maximale de 22KW. Cette deuxième prise P2 de type combo CCS2 est fixe par rapport à la carrosserie 3 du véhicule, ainsi ses connecteurs sont également fixes. La recharge de la batterie BR via la deuxième prise P2 est réalisée par une borne de recharge du réseau électrique terrestre comprenant une deuxième rallonge qui se connecte aux connecteurs fixes de la deuxième prise P2 d'une part, et à la borne de recharge d'autre part, cette manipulation de la deuxième rallonge se faisant par l'opérateur ou le conducteur.

Par exemple la première prise P1, dont les connecteurs 2 sont amovibles par rapport au boitier et donc par rapport à la carrosserie 3, constitue une prise comprenant un connecteur pour une phase du réseau terrestre, un connecteur pour un neutre du réseau terrestre, et un connecteur pour la mise à la terre. Cette première prise P1 comprend la rallonge électrique 1 déployable en dehors du véhicule V, par l'opérateur ou le conducteur, et ses connecteurs 2 sont connectés d'une part à cette rallonge électrique déployable 1 et d'autre part sont en outre propres à être connectés au réseau électrique terrestre au moyen par exemple d'un adaptateur (non représenté). Si l'adaptateur est de type 2 cette première prise P1 permet une recharge de mode 3 précédemment décrit, et si cet adaptateur est un adaptateur pour une prise domestique du réseau terrestre cette première prise P1 permet une recharge en courant alternatif d'une puissance maximale de 11KW, dit mode de recharge de type 2.

Il existe bien entendu d'autre types de prises standards ou spécifiques à quelques constructeurs automobiles applicables à l'invention. On citera pour exemples les prise de type 1, limitées à une puissance alternative de 7,4KW, les prises de type 1 CCS combo, le type selon la norme CHAdeMO essentiellement présent au Japon et en Chine et limité à une puissance continue de 62,5KW, pour les plus courantes.

La figure 2 illustre le véhicule comprenant un module d'alimentation MA assurant l'interface entre la batterie BR et les prises P1, P2. Il est chargé de contrôler l'alimentation de la batterie BR lors de chaque phase de recharge pour le mode 2, 3 ou 4 selon la prise P1, P2 raccordée au réseau électrique terrestre. Pour la première prise P1 (mode 2 ou mode 3, c'est-à-dire que le courant source est alternatif), la rallonge électrique déployable 1 est raccordée au connecteur 2 d'une part, et en outre raccordée à ce module d'alimentation MA d'autre part qui lui-même est raccordé à la batterie BR. Ce module d'alimentation MA comprend par exemple un premier étage électrotechnique propre à redresser le courant entrant, et un deuxième étage propre à lisser le courant et/ou contrôler le courant et/ou la tension de sortie du module à destination de la batterie BR. C'est ce que l'homme du métier nomme couramment un chargeur embarqué. Pour la deuxième prise P2, le module d'alimentation MA n'a pas besoin du premier étage car le courant est déjà continu, ce module d'alimentation MA pouvant dans ce cas être un simple interrupteur, l'intelligence de la recharge (le procédé de contrôle) étant hébergée en partie dans un calculateur du module d'alimentation MA et en partie par la borne de recharge du réseau terrestre, cette borne délivrant le courant continu.

La batterie BR est rechargeable en courant continu ou en courant alternatif (selon le choix de l'utilisateur), via le module d'alimentation MA qui est connecté à la ou les prises de recharge P1, P2. Par exemple, cette batterie BR peut être de type basse tension (typiquement 220 V ou 400 V ou encore 600 V). Mais elle pourrait aussi être de type moyenne tension ou très basse tension (typiquement 48V).

Cette batterie BR alimente aussi des équipements électriques du véhicule V qui sont, par exemple, connectés à un réseau de bord (non représenté), par exemple sous une tension continue de 12V, notamment un ou des calculateurs mettant en œuvre les différents modes de recharge de la batterie BR. A cet effet, la batterie BR est par exemple couplée au réseau de bord via un convertisseur de courant de type DC/DC (non représenté), ainsi qu'éventuellement via un module de distribution d'énergie.

Le réseau électrique terrestre (non représenté) est un réseau acheminant l'énergie électrique produite par des centrales électriques, entre autres. Ce réseau est fixe et présente des interfaces de recharge pour le véhicule selon l'invention. Ces interfaces se présentent par exemple sous la forme d'une simple prise domestique, en allant jusqu'à la borne de recharge acceptant les mode 4 de recharge.

## Revendications

1. Véhicule automobile (V) comprenant :
- une batterie (BR) de stockage d'énergie électrique,
- une carrosserie (3),
- une prise électrique (P1),
cette prise comprenant :
- un boitier solidaire de la carrosserie (3),
- une rallonge électrique (1) déployable en dehors du véhicule (V),
- un connecteur électrique (2) logé de façon amovible dans le boîtier, accessible par un opérateur depuis l'extérieur de la carrosserie (3), ce connecteur (2) étant d'une part électriquement raccordé à la batterie (BR) au moyen de la rallonge électrique (1), et d'autre part propre à être en outre raccordé à un réseau électrique terrestre si la rallonge (1) est déployée, cette rallonge (1) formant une spirale élastique hélicoïdale (4) propre à rappeler le connecteur électrique (2) dans le boîtier, le boîtier comprend un fond à partir duquel s'étend un tube de guidage (5) de la rallonge (1), ce tube (5) étant périphérique à la spirale (4), ce véhicule étant **caractérisé en ce qu'**il comporte une deuxième prise électrique (P2) comprenant :
- un deuxième boitier solidaire de la carrosserie,
- un deuxième connecteur électrique logé de façon permanente dans le deuxième boîtier, accessible par un opérateur depuis l'extérieur de la carrosserie (3), ce connecteur étant d'une part électriquement raccordé à la batterie (BR), et d'autre part propre à être en outre raccordé au réseau électrique terrestre,
cette deuxième prise (P2) étant configurée pour recevoir un courant continu du réseau électrique terrestre.

2. Véhicule selon la revendication 1, ce tube de guidage (5) se prolongeant le long de, et derrière la carrosserie (3).

3. Véhicule selon la revendication 2, ce tube de guidage (5) se prolongeant transversalement au véhicule (V) le long d'une face arrière de la carrosserie (3) par rapport au sens d'avancement principal du véhicule (V), la face arrière se comprenant comme toute partie visible de la carrosserie (3) à partir d'un point d'observation situé en arrière du véhicule (V) et sur l'axe longitudinal (X) du véhicule.

4. Véhicule selon l'une des revendications précédentes, cette prise électrique (P1) étant configurée pour recevoir uniquement un courant alternatif du réseau électrique terrestre.

5. Véhicule selon l'une des revendications précédentes, chacune des deux prises (P1, P2) comprenant une trappe (10, 20) comprenant un moyen d'articulation propre à la positionner dans une position de fermeture et une position d'ouverture du boitier pour l'accès au connecteur électrique par un opérateur depuis l'extérieur du véhicule (V), ces deux trappes (10, 20) étant l'image l'une de l'autre par une symétrie plane dont le plan de symétrie (XZ) est vertical et comprend l'axe longitudinal (X) du véhicule (V).

6. Véhicule selon la revendication 5, les deux trappes (10, 20) étant situées sur une face arrière de la carrosserie (3) par rapport au sens d'avancement principal du véhicule (V), la face arrière se comprenant comme toute partie visible de la carrosserie (3) à partir d'un point d'observation situé en arrière du véhicule (V) et sur l'axe longitudinal (X) du véhicule.

7. Véhicule selon la revendication 6, les deux trappes (10, 20) étant situées sur un des éléments d'un ensemble d'éléments de la carrosserie (3) parmi : une partie arrière d'une aile arrière, un pare-chocs arrière, un feu de signalisation arrière, un ouvrant de coffre arrière.

8. Véhicule selon l'une des revendications 5 à 7, les trappes (10, 20) étant distantes l'une de l'autre.

9. Véhicule selon l'une des revendications 5 à 8, les moyens d'articulation présentant chacun un axe de pivotement de chacune des trappes (10, 20) par rapport aux boitiers, ces trappes (10, 20) s'ouvrant vers l'arrière du véhicule (V) par rapport au sens d'avancement principal du véhicule (V).

## Patentansprüche

1. Kraftfahrzeug (V) mit
- einer Batterie (BR) zur Speicherung elektrischer Energie,
- einer Karosserie (3),
- einer Steckdose (P1),
wobei die Steckdose umfasst:
- ein mit der Karosserie (3) fest verbundenes Gehäuse,
- einen außerhalb des Fahrzeugs (V) ausfahrbaren elektrischen Verlängerungsstecker (1),
- einen in dem Gehäuse abnehmbar gelagerten elektrischen Verbinder (2), der von außerhalb der Karosserie (3) für einen Bediener zugänglich ist, wobei der Verbinder (2) einerseits mit der Batterie (BR) mittels der Elektrische Verlängerung (1) und zum anderen, geeignet, um außerdem an ein landseitiges elektrisches Netz angeschlossen zu werden, wenn die Verlängerung (1) ausgefahren ist, wobei die Verlängerung (1) eine schraubenförmige elastische Spirale (4) bildet, die geeignet ist, den elektrischen Verbinder (2) in das Gehäuse zurückzurufen, das Gehäuse einen Boden aufweist, von dem sich ein Führungsrohr (5) der Verlängerung (1) erstreckt, wobei dieses Rohr (5) um die Spirale (4) herum verläuft, wobei das Fahrzeug **dadurch gekennzeichnet ist, dass** es eine zweite elektrische Steckdose (P2) aufweist, die folgendes umfasst:
- ein zweites Gehäuse, das mit der Verlängerung fest verbunden ist Karosserie, ein zweiter elektrischer Steckverbinder, der dauerhaft in dem zweiten Gehäuse untergebracht ist, von einem Bediener von außerhalb der Karosserie (3) zugänglich ist, wobei der Steckverbinder zum einen elektrisch mit der Batterie (BR) verbunden ist und zum anderen zusätzlich mit dem landseitigen Stromnetz verbunden werden kann, wobei die zweite Steckdose (P2) so konfiguriert ist, dass sie einen Gleichstrom aus dem landseitigen Stromnetz empfängt.

2. Fahrzeug nach Anspruch 1, wobei sich das Führungsrohr (5) entlang und hinter der Karosserie (3) erstreckt.

3. Fahrzeug nach Anspruch 2, wobei sich das Führungsrohr (5) quer zum Fahrzeug (V) entlang einer Rückseite der Karosserie (3) in Bezug auf die Hauptfahrrichtung des Fahrzeugs (V) erstreckt, wobei die Rückseite als jeder sichtbare Teil der Karosserie (3) von einem Beobachtungspunkt aus gesehen wird, der sich hinter dem Fahrzeug (V) und auf der Längsachse (X) des Fahrzeugs befindet.

4. Fahrzeug nach einem der vorhergehenden Ansprüche, wobei die elektrische Steckdose (P1) so konfiguriert ist, dass sie nur einen Wechselstrom aus dem landseitigen Stromnetz empfängt.

5. Fahrzeug nach einem der vorhergehenden Ansprüche, wobei jede der beiden Klappen (P1, P2) eine Klappe (10, 20) umfasst, die Gelenkmittel umfasst, die geeignet sind, sie in einer Schließposition und einer Öffnungsposition des Gehäuses für den Zugang eines Bedieners zum elektrischen Verbinder von außerhalb des Fahrzeugs (V) zu positionieren, wobei diese beiden Klappen (10, 20) das Bild voneinander durch eine ebene Symmetrie sind, deren Symmetrieebene (XZ) vertikal ist und die Längsachse (X) des Fahrzeugs (V) umfasst.

6. Fahrzeug nach Anspruch 5, wobei die beiden Klappen (10, 20) auf einer Rückseite der Karosserie (3) in Bezug auf die Hauptfahrrichtung des Fahrzeugs (V) angeordnet sind, wobei die Rückseite als jeder sichtbare Teil der Karosserie (3) von einem Beobachtungspunkt aus gesehen wird, der sich hinter dem Fahrzeug (V) und auf der Längsachse (X) des Fahrzeugs befindet.

7. Fahrzeug nach Anspruch 6, wobei die beiden Klappen (10, 20) an einem der folgenden Elemente eines Satzes von Karosserieteilen (3) angeordnet sind: einem hinteren Teil eines hinteren Flügels, einem hinteren Stoßfänger, einer hinteren Signalleuchte, einem hinteren Kofferraumdeckel.

8. Fahrzeug nach einem der Ansprüche 5 bis 7, wobei die Klappen (10, 20) voneinander beabstandet sind.

9. Fahrzeug nach einem der Ansprüche 5 bis 8, wobei die Gelenkmittel jeweils eine Schwenkachse jeder der Klappen (10, 20) in Bezug auf die Gehäuse aufweisen, wobei sich diese Klappen (10, 20) in Bezug auf die Hauptfahrrichtung des Fahrzeugs (V) nach hinten des Fahrzeugs (V) öffnen.

## Claims

1. Motor vehicle (V) comprising:
- a battery (BR) for storage of electrical energy,
- a bodywork (3),
- an electrical outlet (P1),
this outlet comprising:
- a housing integral with the bodywork (3),
- an electrical extension cord (1) deployable outside the vehicle (V),
- an electrical connector (2) housed removably in the housing, accessible by an operator from outside the bodywork (3), this connector (2) being on the one hand electrically connected to the battery (BR) by means of the electrical extension cord (1), and on the other hand able to be furthermore connected to a terrestrial electrical network if the extension cord (1) is deployed, this extension cord (1) forming a helical elastic spiral able to recall the electrical connector (4) (2) in the housing, the housing comprises a bottom from which extends a guide tube (5) for the extension piece (1), this tube (5) being peripheral to the spiral (4), this vehicle being **characterised in that** it comprises a second electrical socket (P2) comprising:
- a second housing integral with the bodywork, a second electrical connector housed permanently in the second housing, accessible by an operator from outside the bodywork (3), this connector being on the one hand electrically connected to the battery (BR), and on the other hand able to be furthermore connected to the terrestrial electrical network, this second socket (P2) being configured to receive a direct current from the terrestrial electrical network.

2. Vehicle according to claim 1, this guide tube (5) extending along and behind the bodywork (3).

3. Vehicle according to claim 2, this guide tube (5) extending transversely to the vehicle (V) along a rear face of the bodywork (3) by report at the main direction of advance of the vehicle (V), the rear face comprising as any visible part of the bodywork (3) from an observation point located at the rear of the vehicle (V) and on the longitudinal axis (X) of the vehicle.

4. The vehicle according to claim 1, wherein the electrical socket (P1) is configured to receive only an alternating current from the previous electrical network.

5. Vehicle according to one of the previous claims, each of the two sockets (P1, P2) comprising a hatch (10, 20) comprising an articulation means able to position it in a closing position and an opening position of the housing for access to the electrical connector by an operator from outside the vehicle (V), these two hatches (10, 20) being the image of one another by a plane symmetry whose plane of symmetry (XZ) is vertical and comprises the longitudinal axis (X) of the vehicle (V).

6. Vehicle according to Claim 5, the two hatches (10, 20) being located on a rear face of the bodywork (3) by report at the main direction of advance of the vehicle (V), the rear face comprising itself as any visible part of the bodywork (3) from an observation point located at the rear of the vehicle (V) and on the longitudinal axis (X) of the vehicle.

7. Vehicle according to claim 6, the two hatches (10, 20) being located on one of the items of a set of items of the bodywork (3): a rear part of a rear wing, a rear bumper, a rear signal light, a rear trunk door.

8. Vehicle according to one of Claims 5 to 7, the hatches (10, 20) being distant from each other.

9. Vehicle according to one of Claims 5 to 8, the articulation means each having an axis of pivoting of each of the hatches (10, 20) by report to the housings, these hatches (10, 20) opening towards the rear of the vehicle (V) by report to the main direction of advance of the vehicle (V).
